# EUROPEAN PATENT SPECIFICATION

(11) **EP 0 923 449 B1**
(45) Date of publication and mention of the grant of the patent: **16.04.2003**
(21) Application number: 97932008.2
(22) Date of filing: 10.07.1997
(51) Int. Cl.: B32B 3/30, B21D 13/02, B32B 31/00, B32B 29/08

(54) **MULTI-LAYER CELLULAR COMPOSITE FLAT PANEL**
FLASCHES, ZELLULÄRES, MEHRSCHICHTIGES VERBUNDPANEEL
PANNEAU PLAT, COMPOSITE, CELLULAIRE ET MULTICOUCHE

(30) Priority: 28.08.1996 IT TO960724; 28.08.1996 IT TO960725; 10.09.1996 IT TO960741
(43) Date of publication of application: 23.06.1999
(73) Proprietor: Delta Di Amidei Dario & C., S.A.S., 10010 Banchette (IT)
(72) Inventor: AMIDEI, Dario, I-10010 Banchette (IT)
(74) Representative: Casuccio, Carlo
(86) International application number: IT9700164
(87) International publication number: WO98008674

(56) References cited:
- EP-A- 0 144 870
- DE-A- 1 602 609
- DE-A- 2 725 201
- GB-A- 2 194 808
- US-A- 4 025 996
- US-A- 5 156 327

## Description

Field of the invention - The present invention relates to a multi-layer cellular composite flat panel to be used in many different industrial sectors, such as building, packaging or furniture.

Related Technological Art - Cellular composite flat panels are known, comprising a couple of external plates and an internal cellular structure, made integral with the external plates in a permanent manner.

For example, single-layer and multilayer corrugated cardboard are known wherein one or more sheets of corrugated paper with a certain distance between the 'waves' of the relief pattern are stuck to two outer sheets of flat paper in order to substantially give the whole a mechanical resistance to bending/torsional stresses; these types of corrugated cardboard offer a resistance to bending/torsional stress and to bending that is decidedly dissimilar at 90° across the plane. If the mechanical stresses or bending are parallel to the 'waves' of the corrugated cardboard, the resistance offered is considerably lower than when stress or bending occur along a direction that is perpendicular to the 'waves' of the corrugated cardboard.

Similarly, multi-layer panels are known that are made from wood and wood derivatives such as plywood, particle board, multilayer, the material commonly indicated by the trade mark name "Faesite", etc.; also known are panels made using the sandwich technique, whereby an element such as polystyrene foam is placed between two elements of wood or wood derivatives to produce insulating panels used, for example, in the construction of caravans, or whereby a space is created using cardboard elements, such as in doors for modular-unit kitchens: panels of these types have limitations related to their cost and weight or may be dangerous because of the noxious gases released by the foam in the event of the construction going on fire.

Finally, panels, known as plaster board, comprising a filler space of corrugated cardboard and two outer layers of plaster are known and used in the building trade; also known is a material for covering made by joining a thin sheet of marble to a compact metal sheet using an adhesive.

All the foregoing known multi-layer panels have the disadvantage of offering a resistance to bending/torsional stress and to bending that is not even across the plane, or, when the internal cellular structure is of the honeycomb type, of having a cost per reference unit, for example per square metre, that is high, with the result that use thereof has been limited to special, not widespread applications.

In particular, it is known from the US patent 4,025,996 a composite shell structure formed by an internal embossed sheet covered on both sides by flat sheets. The internal embossed sheet has alternating elevation and depressions, and it is suitable for being use also alone, as a self-supporting element. The material used can be steel, aluminium, or copper, or thermoplastics.

It is also known by US patent 5,156,327 a composite material having a flat core provided with dimples, and two opposite skins between which the flat core is sandwiched. The skins are fixed to the core by forcibly deforming the dimples, whereby the original top surface of the dimples is flattened.

In addition the US patent N. 4,343,866 discloses an embossed sheet material which can be stacked upon each other in order to form a composite structure. The sheet material has a first pattern of small scale relieves, which are originally embossed on the sheet, and, superimposed on such first pattern, a second deep embossed pattern of spaced-apart protuberances. This sheet material is suitable for thermal insulation applications.

Moreover the German patent DE 1,602,609 discloses a cellular core provided for being sandwiched between external coverings so as to form a sandwich plate. The cellular core is shaped with a continuous pattern of pyramidal relieves and depressions, and is fixed to the covering by welding or bonding.

Other examples of composite structures, embossed sheets suitable for being incorporated in a composite structure, and processes for their manufacturing are known from the following patents GB 2272662, EP 437626, DE 2725201 and GB 2194808.

However none of the above documents discloses that a multi-layer cellular composite flat panel, or in general a similar cellular flat structure, is provided with a uniform resistance to bending/torsional stress and to bending through its plane, and moreover defines the dimensional features which allow such uniform resistance.

Summary of the invention - One object of the present invention is therefore to define a multi-layer cellular composite flat panel, wherein it comprises a first external plate or sheet and a second external plate or sheet essentially parallel to and spaced apart from each other; and an internal cellular structure fixed to and between the first external plate or sheet and the second external plate or sheet, the cellular structure defining substantially a plane and consisting of at least one compact diamond-embossed sheet or film having a multiplicity of small scale tridimensional relieves and depressions distributed with uniform pitch p in substantially mutually perpendicular directions in such plane.

The compact diamond-embossed sheet is of a material (e.g. a metal, a metal alloy, a synthetic thermoplastic resin, or a sheet of paper or cellulose derivatives) having suitable thickness and characteristics. Moreover its tridimensional relieves and depressions give a substantially 'hills' and 'valleys' type profile in which small, uniform type cells are created.

The couple of external plates or sheets is of a material than can be paper, with or without an external face coated with plastic or metal films, particularly polythene or aluminium; or wooden, plywood, treated or otherwise, particle board, treated or otherwise, wood-derivative panels; or building materials with functions of covering, such as marble, granite, stone of various types, or ceramic materials, or trowelled covering materials such as Scagliola plaster, gypsum plaster, lime putty, or materials used substantially with structural functions, such as concrete of various types, clay tiles, expanded clay, etc.; all the foregoing external plates being of suitable thickness and permanently joined to the internal cellular structure, by means of strong bonding processes to produce a complete cellular panel.

These cells are of dimensions, shape and distance apart that are consistent with resistance to the bending/torsional stress whereto the cellular structure is subjected when rigidly and permanently coupled with the couple of flat, external sheets or plates, so as to constitute a whole multi-layer cellular composite flat panel.

The above objects are achieved by means of a multi-layer cellular composite flat panel according to the main claim.

These and other objects, characteristics and advantages of the present invention will become apparent in the course of the following description of preferred embodiments, provided as a non-exhaustive examples, taken in conjunction with the accompanying drawings.

### BRIEF DESCRIPTION OF DRAWINGS

- Fig. 1: represents a plan view in an arbitrary scale of a part of the internal cellular structure of the multi-layer cellular composite flat panel according to the invention.
- Fig. 2: represents a cross-sectional view in an arbitrary scale of the internal cellular structure of Fig. 1 along a line 2-2.
- Fig. 3: represents a cross-sectional view in an arbitrary scale of the internal cellular structure of Fig. 1 along a line 3-3, perpendicular to the line 2-2.
- Fig. 4: represents a cross-sectional view in an arbitrary scale of the complete multi-layer cellular composite flat panel with a single-layer internal cellular structure according to a first embodiment of the invention.
- Fig. 5: represents a cross-sectional view in an arbitrary scale of the complete multi-layer cellular composite flat panel with a two-layer internal cellular structure according to a second embodiment of the invention.
- Fig. 6: represents a cross-sectional view in an arbitrary scale of the complete multi-layer cellular composite flat panel with a three-layer internal cellular structure according to a third embodiment of the invention.
- Fig. 7: represents a cross-sectional view in an arbitrary scale of the complete multi-layer cellular composite flat panel with a four-layer internal cellular structure according to a fourth embodiment of the invention.

### DETAILED DESCRIPTION OF THE PREFERRED EMBODIMENT

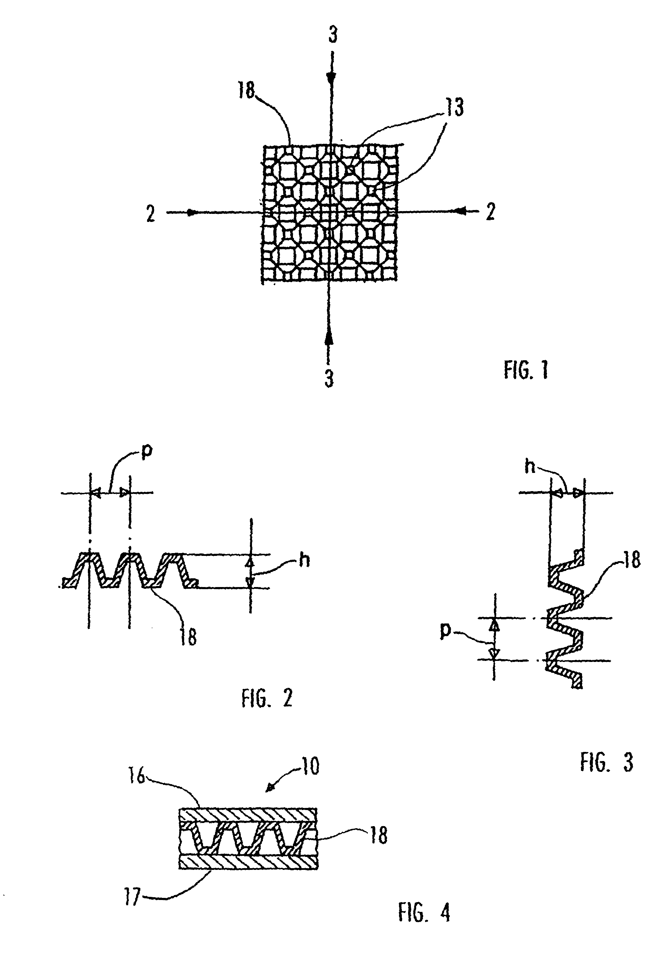

A cross-sectional view of a first embodiment of the multi-layer cellular composite flat panel of the invention is represented in Fig. 4, in which a three-layer cellular panel 10 is composed by a first external plate or sheet 16 and a second external plate or sheet 17, essentially parallel to and spaced apart from each other; and an internal single-layer cellular structure, fixed to and between the first external sheet 16 and the second external sheet 17, defining substantially a plane and consisting of a single compact sheet or film 18 (Fig. 1) showing a diamond-embossed profile having a multiplicity of small scale tridimensional relieves (or 'hills') and depressions (or 'valleys'), forming in combination a multiplicity of cells 13, distribuited with a uniform pitch p in substantially mutually perpendicular directions in the plane.

The plan section shape of the single cells 13 can be circular or polygonal, in particular can be substantially squared as shown in Fig. 1 as illustrative example; the embossing creates a tridimensional impression, having sharp or rounded edges, of a total height h, as shown in Figs. 2 and 3, which represent in an arbitrary scale cross-sectional views of the diamomd-embossed sheet 18 in two mutually perpedicular direction 2-2 and 3-3. The preferred values for h range from 0,1 to 60 mm, best from 0,5 to 50 mm.

In order to obtain the best results, preferred values higher than or equal to 1 of the ratio p/h of the pitch p and the height h are employed, a value p/h substantialy equal to 2 being the best value.

The criss-crossing 'hills' and 'valleys' of the diamond-embossing profile of the compact diamond-embossed sheet 18 (Fig. 1) are obtained by means of a suitable, conventional forming process according to the nature of the material of which the compact diamond-embossed sheet 18 is made; examples of the forming process are a cold plastic deformation process, or a coining process, or a hot plastic deformation process, or an embossing process, or a hot roll-forming process. In particular, the compact diamond-embossed sheet 18 can be produced, as a non-limiting examples, by vacuum hot molding a sheet made of a synthetic thermoplastic resin; or by conveying a single compact sheet of steel into the nip between a couple of forming rolls in an automatic roll forming machine of conventional design.

The cells 13 are suitably spaced apart and are so shaped as to enable the compact diamond-embossed sheet or film 18 be joined permanently to the two external plates or sheet 16, 17 of suitable thickness and characteristics in order to form the complete cellular composite flat panel 10; the special shape assumed by the cellular structure in the cellular composite flat panel 10 of this invention, with a double configuration of finely spaced 'hills' and 'valleys', and the small uniform nature of the cells 13 permits a very high number, preferably as high as approximately 100 per square centimeter, of fixing bridges between the first external plate 16, or the second external plate 17, and the compact diamond-embossed sheet 18, giving the three-layer cellular panel 10 a high mechanical resistance combined with a light weight.

The materials of which the sheet 18 is made can be a metal sheet (as non-limiting examples a steel sheet, a stainless steel sheet, an aluminium sheet, an aluminium alloys sheet, a titanium sheet, a titanium alloys sheet, a copper sheet, or a copper alloys sheet); a synthetic thermoplastic resin sheet (as non-limiting examples a polypropylene sheet or film, a polyethylene sheet or film, a polyvinyl sheet or film, a polyamide sheet or film, a polycarbonate sheet or film, or a polystyrene sheet or film); or a sheet of paper or cellulose derivatives.

Depending on the nature of the materials to be joined, it is possible to use a conventional coupling process for joining the first external sheet 16 and the second external sheet 17 to the compact diamond-embossed sheet 18 of the type of, as non-limiting examples, resistance projection welding, or electric welding, or laser welding, or spot welding, or ultrasonic welding, or hot pressure welding, or diffusion bonding, or soldering, or brazing, or press bonding, or adhesive bonding.

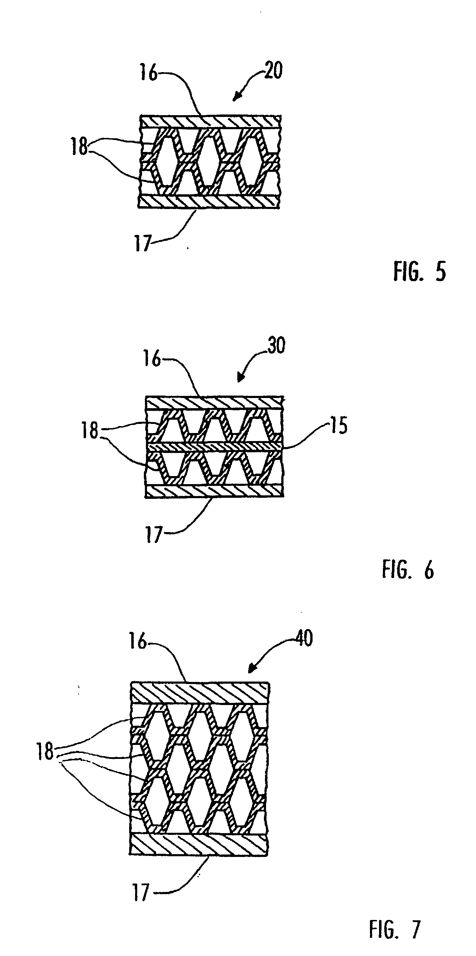

A cross-sectional view of a second embodiment of multi-layer cellular composite flat panel of the invention is represented in Fig. 5, in which a four-layer cellular panel 20 is composed by the first external plate or sheet 16 and the second external plate or sheet 17, essentially parallel to and spaced apart from each other; and an internal dual-layer cellular structure, fixed to and between the first external plate 16 and the second external plate 17, defining substantially a plane and consisting of a couple of the compact diamond-embossed sheet 18 (Fig. 1), showing a diamond-embossed profile having a multiplicity of small scale tridimensional relieves and depressions, forming in combination a multiplicity of cells 13, distribuited with the uniform pitch p in substantially mutually perpendicular directions in the plane.

The two compact diamond-embossed sheets 18 constituing the internal dual-layer cellular structure are superposed and made integral in rigid and permanent manner using a conventional coupling process according to the material of which they are made, for example of the type of resistance projection welding, or electric welding, or laser welding, or spot welding, or ultrasonic welding, or hot pressure welding, or diffusion bonding, or soldering, or brazing, or press bonding, or adhesive bonding.

A cross-sectional view of a third embodiment 30 of multi-layer cellular composite flat panel of the invention is shown in Fig. 6, and represents a variation with respect to the previous embodiment, in that an intermediate sheet 15 is inserted between the couple of the compact diamond-embossed sheets 18 and is made integral with them in permanent manner.

A cross-sectional view of a fourth embodiment of multi-layer cellular composite flat panel of the invention is represented in Fig. 7, in which a six-layer cellular panel 40 is composed by the first external plate or sheet 16 and the second external plate or sheet 17, essentially parallel to and spaced apart from each other; and an internal four-layer cellular structure, fixed to and between the first external plate 16 and the second external plate 17, defining substantially a plane and consisting of four compact diamond-embossed sheet 18 (Fig. 1), each showing a diamond-embossed profile having a multiplicity of small scale tridimensional relieves and depressions, forming in combination a multiplicity of cells 13, distribuited with the uniform pitch p in substantially mutually perpendicular directions in the plane, superposed and made integral in rigid and permanent manner using a conventional coupling process according to the material of which they are made, of the type described before.

It has been discovered that considerable improvements is obtained with the foregoing multi-layer cellular composite flat panels in accordance with the present invention, both of physical characteristics such as lower weight and improved thermal and acoustic insulation, and in view of the lower production costs of the semifinished product, enabling numerous competitive advantages in industrial applications to be obtained with respect to the existing solutions.

Now a description of the industrial applications of the multi-layer cellular flat panel of the invention will be given in various industrial sectors, in view of the materials of which they are made.

In the case in which the internal cellular structure, comprising one or more compact diamond-embossed sheets 18, is made from a sheet of paper or cellulose derivatives, coupled with the first external sheet 16 and the second external sheet 17 sheets similarly made of paper or cellular derivatives by binding with an adhesive, a multi-layer cellular cardboard with improved characteristics over traditional corrugated cardboard is formed.

The advantages of the foregoing multi-layer cellular cardboard are not limited solely to that of the substantially uniform resistance to bending/torsional stress through a 360° plane, but also include the possibility of making bends along any direction whatsoever, so that shapes and solutions are possible for the product packs and wrappings made from it that are completely new and different from those constructed up to now using traditional corrugated cardboard.

The internal cellular structure may consist of a single compact diamond-embossed sheet 18, as displayed in Fig. 4, or of a couple of compact diamond-embossed sheets 18, directly superposed and coupled together as displayed in Fig. 5, or having an intermediate sheet, as displayed in Fig. 6, similarly made of paper or cellulose derivatives, in order to increase the resistance to bending/torsional stress. Of course, the number of compact diamond-embossed sheets 18, and correspondingly the number of possible intermediate sheets, can be increased without exiting from the scope of the invention.

The shape assumed by the internal cellular structure in the three-layer cellular cardboard of this invention also enables creation of cellular paperboard, that is to say of a three-layer cellular cardboard very thin, in which the pattern of the compact diamond-embossed sheets 18 shows very finely spaced-apart 'hills' and valleys' and very low thickness. To advantage, the three-layer cellular paperboard of this industrial invention may, on account of ils lower weight for similar resistance values, replace the compact paperboard used for the wrapping of loose foodstuffs and for the packaging of products in general.

With the structure of the three-layer cellular paperboard offering excellent thermal resistance, this semifinished product is particularly suitable for the packaging of frozen products, both because it maintains the temperature inside and also because the paperboard does not become wet on account of the insulation barrier with respect to the external sheet of paper represented by the internal cellular structure. In addition, the three-layer cellular paperboard of the invention, with polythene-coated or aluminized external paper sheets, that is to say when polythene or aluminium films have been applied to the external paper sheets, may to advantage replace the compact, polythene-coated or aluminized paperboard used in the conventional type packs for the packaging of beverages and other liquids.

In the case in which the internal cellular structure, comprising one or more compact diamond-embossed sheets 18 and possible intermediate sheets, is made from a sheet or film of suitable thickness and material, coupled with the first external plate or sheet 16 and the second external plate or sheet 17, both substantially thin and made of wood or wooden derivatives by a suitable strong binding process, as, for example, binding with an adhesive, a complete wooden or wood-derivative cellular multi-layer composite panel is obtained.

To advantage, the wooden or wood-derivative cellular multi-layer composite panel in its ranges of thicknesses may, on account of its lower weight for similar resistance to bending/torsional stresses, and also of its improved thermal and acoustic insulation, replace the conventional compact type panels made of wood, plywood, particle board, multilayer, medium density fiber board, "Faesite", etc.; it is known, for example, that compact particle board panels are difficult to use for making doors in the furniture industry on account of their being too heavy. The wooden or wood-derivative cellular multi-layer composite panels may also be used to advantage in the construction of caravans and of the partitions used in the building and interior-decoration sectors to replace the conventional foam sandwich panels, offering greater safety in the event of fire and permitting better utilization of the joining methods.

In the case in which the internal cellular structure, comprising one or more compact diamond-embossed sheets 18, is made from a sheet or film of suitable thickness and material, coupled with the first external plate 16 and the second external plate 17, both substantially thin and made of building material by a suitable strong binding process, as, for example, binding with an adhesive, a complete building material cellular multi-layer composite panel is obtained.

By building materials are meant materials used substantially with functions of covering, such as marble, granite, stone of various types, or ceramic materials, or trowelled covering materials such as Scagliola plaster, gypsum plaster, lime putty, or materials used substantially with structural functions, such as concrete of various types, clay tiles, expanded clay, etc.

Building material cellular multi-layer composite panels have two principal areas of application in both the traditional building sector and that of prefabricated constructions. The first area of application is for substantially aesthetic type, building material cellular panels in the sector of coverings, both of outer vertical walls and of inner vertical walls, and of coverings for false ceilings, where the traditional materials used today have functional shortcomings; the building material cellular multi-layer composite panels used for this type of application will generally, but not exclusively, be three-layer type.

The second area of application for building material multi-layer composite cellular panels, made of both aesthetic and structural materials depending on the degree of finishing required, is in the semistructural sector for the construction of internal walls and separator systems, characterized by being low-weight, highly rigid and with optimum thermal and acoustic insulating properties; generally, but not exclusively, building material multi-layer composite cellular panels having an internal cellular structure of two or more compact diamond-embossed sheets 18 and possibly intermediate sheets, will be used for these purposes.

In the field of fire prevention applications, considerable advantage may be obtained from using internal cellular structures made from fire retardant materials that have good thermal and acoustic insulation properties, rather than the types of insulation made from polystyrene foam that are pollutant in the event of fire.

Naturally variants, additions or changes may be made to the present invention by persons skilled in the sector art.

In short, while adhering to the principle of this invention, details of the design and the forms of embodiment described and illustrated in the foregoing may be amply modified without exiting from the scope of the invention.

## Claims

1. A multi-layer cellular composite flat panel comprising:
- a first external plate or sheet and a second external plate or sheet essentially parallel to and spaced apart from each other; and
- an internal cellular structure arranged between and made integral in permanent manner with said first external plate or sheet and said second external plate or sheet, said internal cellular structure defining substantially a plane and being formed by at least one compact embossed sheet or film made from an original sheet with a thickness tᵢ, said embossed sheet or film having a multiplicity of tridimensional relieves and depressions which are of a small scale along the extension of said embossed sheet and which are distributed with uniform pitch p in substantially mutually perpendicular directions in said plane,
**characterized in that** the total height h of said tridimensional relieves and depressions, the ratio p/h of said pitch p and said total height h, and said thickness tᵢ have respective prefixed values which are in combination capable of giving a substantially uniform resistance under bending/torsional stress to said cellular composite flat panel through the plane thereof.

2. Panel according to claim 1, **characterized in that** said total height h has a value of between 0,1 and 60 mm.

3. Panel according to claim 2, **characterized in that** said total height h has a value of between 0,5 and 50 mm.

4. Panel according to claim 2, **characterized in that** said ratio p/h of said pitch p and said total height h has a value equal or higher than 1.

5. Panel according to claim 4, **characterized in that** said ratio p/h of said pitch p and said total height h has a value approximately equal to 2.

6. Panel according to any of the preceding claims, **characterized in that** said embossed sheet or film is made of a material selected from the group consisting of paper and cellulose derivatives.

7. Panel according to claim 6, **characterized in that** said first external plate or sheet and said second external plate or sheet are obtained from a sheet made of a material selected from the group consisting of paper, cellulose derivatives, polyethylene film coated paper, aluminium film coated paper and polypropylene film coated paper.

8. Panel according to any of claims 1-5, **characterized in that** said embossed sheet or film is made of a metal selected from the group consisting of steel, stainless steel, aluminium, aluminium alloys, titanium, a titanium alloys, copper, and copper alloys.

9. Panel according to any of claims 1-5, **characterized in that** said embossed sheet or film is made of a synthetic thermoplastic resin selected from the group consisting of polypropylene, polyethylene, polyvinyl, polyamide, polycarbonate and polystyrene.

10. Panel according to any of claims 1-5, **characterized in that** said first external plate or sheet and said second external plate or sheet are made of a material selected from the group consisting of wood, plywood, particle board, multilayer, and medium density fiber board.

11. Panel according to claim 1, **characterized in that** said internal cellular structure comprises a plurality of said embossed sheet or film, superposed one upon the other and made integral in rigid and permanent manner.

12. Panel according to claim 11, **characterized in that** said internal cellular structure comprises a couple of said embossed sheet or film, and an intermediate flat sheet inserted between said couple of said embossed sheets, superposed one upon the others and made integral in rigid and permanent manner.

13. Panel according to any of claims 1-5, **characterized in that** said first external plate or sheet and said second external plate or sheet are made of a material selected from the group consisting of marble, granite, stone, glass, ceramic, concrete, foamed clay and clay tile.

14. Panel according to any of claims 1-5, **characterized in that** said first external plate or sheet and said second external plate or sheet are made of a material selected from the group consisting of scagliola plaster, gypsum plaster and lime putty.

15. Panel according to any of claims 1-5, **characterized in that** said multiplicity of tridimensional relieves and depressions is obtained by means of a forming process selected from the group consisting of roll forming, cold plastic deformation, coining, hot plastic deformation, embossing, hot roll-forming, and vacuum hot moulding.

16. Panel according to any of claims 1-5, **characterized in that** said internal cellular structure is fixed to said first external plate or sheet and to said second external plate or sheet by means of a coupling process selected from the group consisting of resistance projection welding, electric welding, laser welding, spot welding, ultrasonic welding, hot pressure welding, diffusion bonding, soldering, brazing, press bonding, and adhesive bonding.

## Patentansprüche

1. Ein Mehrschicht- Zellen- Verbund Flach- Panel aufweisend:
- Eine erste äußere Platte oder Blech und eine zweite äußere Platte oder Blech wesentlich parallel zueinander und mit Abstand voneinander, und
- Einer inneren Zellenstruktur angeordnet zwischen und hergestellt integral in permanenter Weise mit der ersten äußeren Platte oder Blech und dem zweiten Platte oder Blech, die innere Zellenstruktur definieren wesentlich eine Fläche und sind geformt von mindestens einem geprägtem Blatt oder Film hergestellt aus einem originalem Blatt mit einer Dicke tᵢ, das geprägtes Blatter oder Film hat eine Vielzahl von dreidimensionalen Reliefs und Eindrücken welche eine kleine Skala entlang der gesamten Länge des geprägten Blatts haben und welche gleichmäßig mit einem Abstand p im wesentlichen gegenseitig rechtwinklig in Richtung der Fläche verteilt sind,
**dadurch gekennzeichnet, daß** die totale Höhe h in dem dreidimensionalem Relief und Eindrücken, das Verhältnis p/h von dem Abstand p und der totalen Höhe h, und die Dicke tᵢ jeweils vordefinierte Werte haben welche in Kombination fähig sind für gegebenen gleichmäßigen Wiederstand unter Biege-/Torsionsbeanspruchung durch den Verbundzellenflachpanel durch die Fläche zu sorgen.

2. Panel nach Anspruch 1, **dadurch gekennzeichnet, daß** die Höhe h Werte zwischen 0,1 und 60 mm hat.

3. Panel nach Anspruch 2, **dadurch gekennzeichnet, daß** die Höhe h Werte zwischen 0,5 und 50mm hat.

4. Panel nach Anspruch 2, **dadurch gekennzeichnet, daß** das Verhältnis p/h der Abstände p und der Höhe h Werte gleich oder höher 1 hat.

5. Panel nach Anspruch 4, **dadurch gekennzeichnet, daß** das Verhältnis p/h der Abstände p und der Höhe h Werte ungefähr gleich zu 2 hat.

6. Panel nach jedem der vorangegangenen Ansprüche, **dadurch gekennzeichnet, daß** das geprägte Blatt oder Film aus einem Material gewählt aus der Gruppe die aus Papier- und Zelluloseableitungen hergestellt ist.

7. Panel nach Anspruch 6, **dadurch gekennzeichnet, daß** die erste äußere Platte oder Blech und die zweite äußere Platte oder Blech aus einem Halbzeug aus einem Material gewählt aus den Gruppen welche in Papier, Zelluloseableitungen, Polyethylenbeschichtetes Papier, Aluminiumbeschichtetes Papier und Polypropylenbeschichtetes Papier enthalten sind.

8. Panel nach jedem der Ansprüche 1-5, **dadurch gekennzeichnet, daß** das geprägte Blatt oder Film aus Metall gewählt aus den Gruppen Stahl, Rostfreien Stahl, Aluminium, Aluminiumlegierungen, Titanium, Titaniumlegierungen, Kupfer, und Kupferlegierungen hergestellt ist.

9. Panel nach jedem der Ansprüche 1-5, **dadurch gekennzeichnet, daß** das geprägte Blatt oder Film aus synthetischen thermoplastischen Harz gewählt aus den Gruppen Polypropylen, Polyethylen, Polyvinyl, Polyamid, Polycarbonat und Polystyren hergestellt ist.

10. Panel nach jedem der Ansprüche 1-5, **dadurch gekennzeichnet, daß** die erste äußere Platte oder Blech und die zweite äußere Platte oder Blech aus einem Material gewählt aus den Gruppen Holz, Sperrholz, Spanplatten, Mehrschicht, und mittlere Dichte Holzfaserplatten hergestellt sind.

11. Panel nach Anspruch 1, **dadurch gekennzeichnet, daß** die innere Zellenstruktur eine Mehrzahl von benannten geprägtem Blatt oder Film, überlagert eines über dem Anderen und hergestellt als Gesamtheit in starrer und permanenter Weise aufweist.

12. Panel nach Anspruch 11, **dadurch gekennzeichnet, daß** die innere Zellenstruktur ein Paar von geprägtem Blatt oder Film, und einem Zwischenflachblatt eingebracht zwischen das Paar von geprägtem Blatt oder Film, überlagert eine über dem Anderen und hergestellt als Gesamtheit in starrer und permanenter Weise aufweist.

13. Panel nach jedem der Ansprüche 1-5, **dadurch gekennzeichnet, daß** die erste äußere Platte oder Blech und die zweite äußere Platte oder Blech aus einem Material gewählt aus der Gruppe Marmor, Granit, Stein, Glas, Beton, geschäumter Lehm, Lehmfliese hergestellt sind.

14. Panel nach jedem der Ansprüche 1-5, **dadurch gekennzeichnet, daß** die erste äußere Platte oder Blech und die zweite äußere Platte oder Blech aus einem Material gewählt aus der Gruppe Stuckgips, Gips, Kalkkitt hergestellt sind.

15. Panel nach jedem der Ansprüche 1-5, **dadurch gekennzeichnet, daß** die Vielzahl von dreidimensionalen Reliefs und Eindrücken erhalten durch Formprozesse gewählt aus der Gruppe des Walzformen, kalte Plastikdeformation, Prägen, heiß/warm Plastikdeformation, Bombieren, heiß/warm Walzen, Vakuum- heiß- umformen.

16. Panel nach jedem der Ansprüche 1-5, **dadurch gekennzeichnet, daß** die innere Zellenstruktur fixiert zu der ersten äußeren Platte oder Blech und der zweiten äußeren Platte oder Blech durch ein Fügeverfahren gewählt aus der Gruppe Widerstandsprojektionsschweißen, Elektrodenschweißen, elektrisches Schweißen, Laserschweißen, Punktschweißen, Ultraschallschweißen, Heißdruckschweißen, Diffusionskleben, Weichlöten, Hartlöten, Druckkleben, Kleben mit Kleber.

## Revendications

1. Un panneau plat composite cellulaire multicouche formé de :
- une première plaque ou feuille externe et une deuxième plaque ou feuille externe essentiellement parallèle et espacée l'une de l'autre; et
- une structure cellulaire interne disposée entre, et rendue partie intégrante de façon permanente avec, la dite première plaque ou feuille externe et la dite deuxième plaque ou feuille externe, étant donné que ladite structure cellulaire interne définit fondamentalement un plan et elle est composée par au moins une feuille ou film compact lanté provenant d'une feuille originelle ayant une épaisseur tᵢ, étant donné que ladite feuille ou film lanté a une multiplicité de reliefs et creux tridimensionnels qui ont une petite échelle le long de l'extension de ladite feuille lantée et qui sont distribués avec un pas uniforme p fondamentalement dans les directions réciproquement perpendiculaires dans ledit plan,
**caractérisés en ce que** la hauteur totale h des dits reliefs et creux tridimensionnels, le rapport p/h du dit pas p et de ladite hauteur h, et ladite épaisseur tᵢ ont des respectives valeurs préfixées qui sont en combinaison capable de donner une résistance fondamentalement uniforme dans un effort de flexion/torsion au dit panneau plat composite cellulaire à travers son plan.

2. Panneau selon la revendication 1, **caractérisé en ce que** ladite hauteur totale h a une valeur entre 0,1 et 60 mm.

3. Panneau selon la revendication 2, **caractérisé en ce que** ladite hauteur totale h a une valeur entre 0,5 et 50 mm.

4. Panneau selon la revendication 2, **caractérisé en ce que** ledit rapport p/h du dit pas p et ledit hauteur totale h a une valeur égale ou supérieure à 1.

5. Panneau selon la revendication 4, **caractérisé en ce que** ledit rapport p/h du dit pas p e ledit hauteur totale h a une valeur égale à environ 2.

6. Panneau selon l'une des revendications précédentes, **caractérisé en ce que** ladite feuille ou film lanté est fabriqué à partir d'un matériel choisi d'un groupe constitué des dérivés du papier et de la cellulose.

7. Panneau selon la revendication. 6, **caractérisé en ce que** ladite première plaque ou feuille externe et ladite deuxième plaque ou feuille externe proviennent d'une feuille fabriquée à partir d'un matériel choisi du groupe constitué des dérivés du papier, cellulose, papier couché au polyéthylène, papier aluminé et papier couché au polypropylène.

8. Panneau selon l'une des revendications 1 à 5, **caractérisé en ce que** ladite feuille ou film lanté est fabriqué à partir d'un métal choisi du groupe constitué d'acier, acier inoxydable, aluminium, alliages d'aluminium, titane, alliages de titane, cuivre et alliage de cuivre.

9. Panneau selon l'une des revendications 1 à 5, **caractérisé en ce que** ladite feuille ou film lanté est fabriqué à partir d'une résine thermoplastique synthétique choisie du groupe constitué de polypropylène, polyéthylène, polyvinyle, polyamide, polycarbonate et polystyrène.

10. Panneau selon l'une des revendications 1 à 5, **caractérisé en ce que** ladite première plaque ou feuille externe et ladite deuxième plaque ou feuille externe sont fabriquées à partir d'un matériel choisi du groupe constitué de bois, contreplaqué, panneau de particules, multicouche et panneau de fibres à densité moyenne.

11. Panneau selon la revendication 1, **caractérisé en ce que** ladite structure cellulaire interne comprend une pluralité de ladite feuille ou film lanté, superposé une sur l'autre et rendu partie intégrante de façon rigide et permanente.

12. Panneau selon la revendication 11, **caractérisé en ce que** ladite structure cellulaire interne comprend deux des dites feuilles ou films lantés, et une feuille plate intermédiaire insérée entre les deux des dites feuilles lantées, superposées une sur l'autre et rendues partie intégrante de façon rigide et permanente.

13. Panneau selon l'une des revendications 1 à 5, **caractérisé en ce que** ladite première plaque ou feuille exteme et ladite deuxième plaque ou feuille externe sont fabriquées à partir d'un matériel choisi du groupe constitué de marbre, granit, pierre, verre, céramique, béton, argile mousse et carreau en argile.

14. Panneau selon l'une des revendications 1 à 5, **caractérisé en ce que** ladite première plaque ou feuille externe et ladite deuxième plaque ou feuille externe sont fabriquées à partir d'un matériel choisi du groupe constitué de pâte scagliola, plâtre et chaux en pâte.

15. Panneau selon l'une des revendications 1 à 5, **caractérisé en ce que** ladite multiplicité de reliefs et creux tridimensionnels est obtenue au moyen d'un procédé de formage choisi du groupe constitué de formage aux galets, déformation plastique à froid, frappe en relief, déformation plastique à chaud, gaufrage, profilage à chaud et moulage sous vide à chaud.

16. Panneau selon l'une des revendications 1 à 5, **caractérisé en ce que** ladite structure cellulaire interne est fixée à ladite première plaque ou feuille externe et à ladite deuxième plaque ou feuille externe au moyen d'un procédé d'accouplement choisi du groupe constitué de soudage par résistance par bossage, soudage électrique, soudage au laser, soudage par points, soudage ultrasonique, soudage par pression chaude, soudage par diffusion, soudure, brasage, soudure par presse et doublage par adhésif.
